Europäisches Patentamt

European Patent Office

Office européen des brevets

(11) Veröffentlichungsnummer: **0 003 140**
**B1**

(12) # EUROPÄISCHE PATENTSCHRIFT

(21) Anmeldenummer: **79100109.2**

(22) Anmeldetag: **15.01.79**

(51) Int. Cl³: **C 07 C 17/42,**
**C 07 C 19/00**

(54) Verfahren zur Stabilisierung von Polychloralkanen und Stabilisatorkombinationen

(30) Priorität: **18.01.78 DE 2801956**

(43) Veröffentlichungstag der Anmeldung:
**25.07.79 Patentblatt 79/15**

(45) Bekanntmachung des Hinweises auf die Patenterteilung:
**03.09.80 Patentblatt 80/18**

(84) Benannte Vertragsstaaten:
**BE DE FR GB IT**

(56) Entgegenhaltungen:
**Chemical Abstracts, Vol. 83,**
**Nr. 78560r, 1975,**
**Columbus, Ohio, USA**
**Krishtal N.F. "Stabilization of trichloroethylene",**
**Seite 606**

(73) Patentinhaber: **Hoechst Aktiengesellschaft**
**Zentrale Patentabteilung Postfach 80 03 20**
**D - 6230 Frankfurt**
**Main 80 DE**

(72) Erfinder: **Landau, Helmut**
**Altvaterstrasse 4**
**D - 8906 Gersthofen DE**

Courier Press, Leamington Spa, England.

# 0 003 140

## Verfahren zur Stabilisierung von Polychloralkanen und Stabilisatorkombinationen

Polychloralkane werden im allgemeinen als Weichmacher in Kunststoffen und Anstrichmitteln mit flammhemmenden Eigenschaften verwendet. In erheblichem Umfang werden Polychloralkane aber auch in Schmierstoffen als Hochdruckzusatz zur Verbesserung der Schmiereigenschaften eingesetzt. Für die Verwendung in Schmierstoffzubereitungen werden an die Polychloralkane erhöhte Anforderungen hinsichtlich ihrer Temperaturbeständigkeit — Verfärbung und Abspaltung von Salzsäure — gestellt. So wird für die Verwendung in sog. "Pilgerölen" für den Rohrzug oder auch für hochbelastete Räumöle an die Polychloralkane die Forderung gestellt, daß diese in Kontakt mit Eisen oder anderen Schwermetallen bei 150°C über längere Zeit stabil bleiben, d.h. sich nicht unter Salzsäureabspaltung zersetzen und daß sie keine Korrosionen an den Metallen hervorrufen.

Während in den genannten Schmierstoffen die Konzentrationen an Polychloralkanen sehr hoch sind, meist über 50 Gew.-%, enthalten normale Automaten-Schneidöle im allgemeinen nur einige Gewichtsprozent Polychloralkane. Die an diese Öle gestellte Forderung ist, daß in genormten Tests bei Zusatz von Wasser in Kontakt mit Metallen ebenfalls keine Korrosionen auftreten. Man könnte dies zwar durch den Zusatz von basischen Erdalkali-Petrol-sulfonaten, die als Korrosionsinhibitoren für Schmierstoffe an sich bekannt sind, erreichen, verstößt damit jedoch gegen eine andere Forderung, nämlich die, daß die Schneidöle praktisch aschefrei sein müssen.

Er ist bekannt, die Wärmestabilität von Polychloralkaner durch Zusatz von Epoxidderivaten von Fettsäuren oder von pflanzlichen epoxidierten Ölen zu verbessern. Ferner werden auch Verfahren zur Stabilisierung von Polychlorlkanen mit Kombinationen von epoxidierten Fettsäureestern mit tertiären Aminen, Schiffschen Basen oder Phenylglycidyläthern beschrieben (DE - OS 2 115 874). Diese Verfahren haben den Nachteil, daß die Stabilisierung nicht ausreicht, wenn die Polychloralkane für spezielle Verwendungszwecke bestimmt sind. Darüber hinaus bilden sich beim Einsatz von Kombinationen aus epoxidierten Fettölen und Aminen sowie von Aminen allein (DRP 685 125) gefärbte Anlagerungsprodukte mit den Polychloralkanen.

Die Verwendung von Stabilisatorkombinationen, bestehend aus Epoxidderivaten von Säuren oder von Epoxidderivaten von Estern dieser Säuren oder von epoxidierten pflanzlichen Ölen und organischen oder anorganischen Magnesiumverbindungen, ist aus der DE - AS 1 935 744 bekannt. Diese Kombinationen haben den Nachteil, daß sie nicht aschefrei sind und man außerdem auch mit ihnen nicht den geforderten hohen Stabilitätsgrad der Polychloralkane für spezielle Anwendungen erreichen kann.

Asinger beschreibt in "Die petrochemische Industrie", Band 1, Seite 674 (1971) die Verwendung von 1,2-Epoxi-3-phenoxypropen als Stabilisierungsmittel für Polychloralkane. Diese Verbindung ergibt zwar, wie auch die anderen genannten Epoxidverbindungen, einen ausreichenden Stabilitätsgrad für die Verwendung der Polychloralklane auf dem Weichmacher- und Flammschutzgebiet, erfüllt aber nicht die Anforderungen, die an ein hochtemperaturstabiles Polychloralkan für die Verwendung in Schmierstoffen gestellt werden.

Es wurde nun gefunden, daß man Polychloralkane mit dem geforderten, hohen Stabilitätsgrad erhalten kann, wenn man die Polychloralkane mit Kombinationen, bestehend aus bestimmten Epoxidverbindungen und organischen tertiären Phosphiten stabilisiert.

Die vorliegende Erfindung betrifft somit ein Verfahren zur Hochtemperaturstabilisierung von Polychloralkanen mit Stabilisatorkombinationen auf Basis von Epoxiden, welches dadurch gekennzeichnet ist, daß man Polychloralkanen, die 8 bis 30 Kohlenstoffatome und einen Chlorgehalt von 10 bis 70 Gewichtsprozent aufweisen, eine Stabilisatorkombination folgender Zusammensetzung zufügt:

a) 10 bis 90 Gewichtsprozent
$a_1$) cycloaliphatische Epoxide (Epoxidsauerstoff ausschließlich an cycloaliphatischen Ringen gebunden),
$a_2$) gemischt cycloaliphatisch-aliphatische Epoxide (Epoxidsauerstoff unterschiedlich gebunden),
$a_3$) Glycidylester cycloaliphatischer Carbonsäuren (Epoxidsauerstoff ausschließlich an den Seitenketten gebunden),
$a_4$) Glycidyläther cycloaliphatischer Alkohole (Epoxidsauerstoff ausschließlich an den Seitenketten gebunden) oder
$a_5$) cycloaliphatische Epoxyäther (Epoxidsauerstoff ausschließlich an cycloaliphatischen Ringen gebunden) und
b) 90 bis 10 Gewichtsprozent tertiäre Ester der phosphorigen Säure mit
$b_1$) längerkettigen, geradlinigen oder verzweigten aliphatischen Monoalkoholen,
$b_2$) Polyalkoholen,
$b_3$) Phenol oder
$b_4$) Alkylphenolen, die 8 bis 18 Kohlenstoffatome in den Alkylketten aufweisen.

Es war überraschend und nicht zu erwarten, daß die erfindungsgemäße Stabilisierung der Polychloralkane erheblich wirkungsvoller ist als eine Stabilisierung nach dem Stand der Technik nur mit Epoxiden bzw. mit Epoxiden und Magnesiumsalzen, nachdem tertiäre organische Phosphite allein überhaupt keine stabilisierende Wirkung in Polychloralkanen zeigen. Man mußte vielmehr damit rechnen, daß der Zusatz von Phosphiten die Stabilisierungwirkung der Epoxide eher verschlechtern würde, da unter den scharfen Test-Bedingungen Reaktionen zwischen Phosphit und Epoxid nicht auszuschließen waren. Daß dies nicht der Fall ist, sondern sogar eine Art Synergismus zwischen Epoxid und Phosphit vorliegt, war keineswegs vorhersehbar.

Geeignete Epoxide sind solche, die im Molekül einen oder mehrere cycloaliphatische Ringe und außer diesen und den Epoxidgruppen nur aliphatische Reste enthalten. Nach der Stellung der Epoxigruppen zum cycloaliphatischen Ring lassen sich folgende Untergruppen unterscheiden [(Kunststoffhandbuch, Band 11, S. 247 ff (1971), Herausgeber: Vieweg, Reiher und Scheurlen]:

a) Epoxide, bei denen der Epoxysauerstoff ausschließlich an cycloaliphatischen Ringen gebunden ist, z.B. Dicyclopentadiendioxid (I) oder Äther cycloaliphatischer Epoxialkohole, wie Bis-(2,3-epoxicyclopentyl)-äther (V), b) Epoxide mit ausschließlich an den Seitenketten gebundenem Epoxidsauerstoff, z.B. der Diglycidylester der Hexahydrophthalsäure (III) und das Bis-(glycidyl-oxymethyl)-tricyclodecan (IV),

c) Epoxide mit unterschiedlich gebundenen Expoxisauerstoffatomen, wie z.B. Vinylcyclohexendioxid (II). Im Rahmen der vorliegenden Erfindung sollen die geeigneten Epoxide als cycloaliphatische Epoxide (I), gemischt cycloaliphatisch-aliphatische Epoxide (II), Glycidylester cycloaliphatischer Carbonsäuren (III), Glycidyläther cycloaliphatischer Alkohole (IV) und cycloaliphatische Epoxyäther (V) bezeichnet werden. Struktur einiger typischer Vertreter siehe anliegendes Formelblatt. Bevorzugt wird die Verbindung (III).

Unter tertiären organischen Phosphiten werden verstanden: neutrale Ester der phosphorigen Säure mit längerkettigen geradlinigen oder verzweigten aliphatischen Monoalkoholen, bevorzugt solchen mit 8 bis 20 C-Atomen, wie z.B. n-Octanol, 2-Äthylhexanol, 2-Dodecanol, Isodecanol, mit Polyalkoholen, wie z.B. Pentaerythrit, mit Phenol oder mit Alkylphenolen mit $C_8$- bis $C_{18}$-Alkylketten, wie Nonylphenol oder Dodecylphenol. Das Phosphoratom kann mit gleichen oder auch mit unterschiedlichen alkoholischen Resten verknüpft sein. Genannt seien beispielsweise die folgenden Phosphite: Diphenylisodecylphosphit, Diphenylisooctylphosphit, Triisodecylphosphit, Trilaurylphosphit, Phenyldiisodecylphosphit, Diisodecylpentaerylthrityl-di-phosphit und bevorzugt Tris-(nonylphenyl)-phosphit.

Die erfindungsgemäß zu stabilisierenden Polychloralkane sind Chlorierungsprodukte von im wesentlichen paraffinischen, verzweigten oder geradkettigen Kohlenwasserstoffen, insbesondere den letztgenannten, mit 8 bis 30 C-Atomen im Molekül, bevorzugt von technischen Paraffinschnitten mit beispielsweise 10 bis 13, 14 bis 17, 18 bis 24 und gegebenenfalls bis zu ca. 30 C-Atomen, deren Chlorgehalt zwischen 10 und 70 Gew.-% liegen kann.

In den Stabilisatorkombinationen, die in Mengen von 0,2 bis 5, vorzugsweise 0,5 bis 2 Gew.-%, bezogen auf das Polychloralkan, diesem zugesetzt werden, kann sich das Mengenverhältnis von Epoxid zu Phosphit in weiten Grenzen bewegen, die für das Epoxid zwischen 10 und 90 Gew.-% und hieraus folgend für das Phosphit bei 90 bis 10 Gew.-% liegen. Bevorzugt werden Kombinationen im Gewichtsverhältnis Epoxid zu Phosphit wie 5 : 1 bis 1 : 4 insbesondere 2 : 1 bis 1 : 2 eingesetzt.

Die Stabilisierung der Polychloralkane erfolgt zweckmäßigerweise unmittelbar nach beendeter Chlorierung durch Einarbeiten der Stabilisatorkombination in das noch warme Chlorierungsprodukt. Man erreicht auf diese Weise optimale Stabilitätsgrade.

Die folgenden Beispiele dienen der weiteren Erläuterung der Erfindung und ziegen ihre Vorteile auf. Die angegebenen Mengen sind stets Gewichtsmengen.

Beispiel 1

Einem Polychloralkan, das durch Chlorierung eines Paraffinschnittes mit 10 bis 13 C-Atomen erhalten worden war, einen Chlorgehalt von ca. 56% und eine Jodfarbzahl von 0,5 besaß, wurden unmittelbar nach seiner Fertigstellung Proben entnommen, die noch warm mit Stabilisatorkombinationen gemäß der Erfindung stabilisiert bzw. zum Vergleich mit bekannten Stabilisatoren versetzt wurden. Die einzelnen Proben wurden sodann einem Hochtemperaturstabilitätstest unterworfen, bie dem wie folgt vorgegangen wird:

In ein Reagenzglas mit 28 mm lichter Weite und einer Höhe von 200 mm werden 50 g des stabilisierten Polychloralkans und 2 g Eisenspäne, sog. "Herbert-Späne", hergestellt aus Stahl gemäß British Standard 970/EN 8, wie sie für den Korrosionstest nach der Britischen Norm IP 125 verwendet werden, eingewogen. Die Späne werden vor Gebrauch mit Trichloräthylen und anschließend mit Aceton gewaschen und getrocknet.

Das Reagenzglas wird in ein Heizbad eingetaucht, so daß das Polychloralkan vollständig von der Heizflüssigkeit umspült ist. Die Temperatur wird auf 150°C ± 1°C eingestellt. Während der gesamten Testzeit werden 2,5 l Luft/Stunde durch das Polychloralkan geblasen. Als Kriterium für die thermische Stabilität des Produktes wird die Zeit angegeben, nach der das Produkt schwarz ist, d.h. eine Jodfarbzahl nach DIN 6162 von über 1 100 angenommen hat. Ein weiteres Kriterium ist der Zustand der Eisenspäne hinsichtlich aufgetretener Korrosionen. In der nachstehenden Tabelle werden die Ergebnisse der Untersuchungen aufgeführt. Die enthaltenen Stabili-

3

## O 003 140

satormengen sind in Gew.-% bezogen auf das Polychloralkan, angegeben. Die Beispiele 1a, 1j und 1k sind Vergleichsbeispiele entsprechend dem Stand der Technik, Beispiel 1l zeigt, daß Phosphit allein völlig ungeeignet ist.

| Vers. Nr. | Stabilisator und Menge (Gew.—%) | Temperungs- zeit (Stdn.) | Jodfarb- zahl | Korrosion |
|---|---|---|---|---|
| 1 a | 1% epoxidiertes Sojaöl (ca. 5,8% Epoxisauerstoff) | 0,5 | >1100 | ja |
| 1 b | 1% Hexahydrophthalsäure- diglycidylester 1% TNPP +) | 20 | 5 | nein |
| 1 c | 1% Hexahydrophthalsäure- diglycidylester 1% TNPP +) | 72 | >1100 | nein |
| 1 d | 1% Hexahydrophthalsäure- diglycidylester 1% Diphenyl-isooctyl- phosphit | 15 | 40 | nein |
| 1 e | 1% Hexahydrophthalsäure- diglycidylester 1% Trilaurylphosphit | 15 | 30 | nein |
| 1 f | 1% Hexahydrophthalsäure- diglycidylester 1% Bis-(nonylphenyl)- phenylphosphit | 15 | 40 | nein |
| 1 g | 1% Vinylcyclohexendioxid 1% TNPP +) | 15 | 60 | nein |
| 1 h | 1% Tetrahydrophthalsäure- diglycidylester 1% TNPP +) | 15 | 30 | nein |
| 1 i | 1% Bis-(glycidyloxymethyl)- tricyclodekan 1% TNPP +) | 37 | 100 | nein |
| 1 j | 1% epoxidiertes Sojaöl 0,23% Magnesiumstearate ++) | 1,25 | >1100 | ja |
| 1 k | 2% epoxidiertes Sojaöl 0,23% Magnesiumstearate ++) | 4,75 | >1100 | ja |
| 1 l | 2% Trisnonylphenylphosphit | 0,5 | >1100 | ja |

+) TNPP = Trisnonylphenylphosphit

++) entsprechend 100 ppm $Mg^{++}$

### Beispiel 2

Wie in Beispiel 1 beschrieben, wurde ein unterschiedlich stabilisiertes Polychloralkan mit 10 bis 13 C-Atomen und einem Chlorgehalt von 70 Gew.-% untersucht. Es wurden folgende Ergebnisse erhalten:

4

| Vers Nr. | Stabilisator und Menge (Gew.—%) | Temperungs-zeit (Stdn.) | Jodfarb-zahl | Korrosion |
|---|---|---|---|---|
| 2 a | 2% epoxidiertes Sojaöl<br>0,5% Hexahydrophthal-säurediglycidylester | 5,5 | >1100 | ja |
| 2 b | 1% epoxidiertes Sojaöl | 2 | >1100 | ja |
| 2 c | 1% Hexahydrophthalsäure-diglycidylester<br>1% TNPP +) | 23,5 | 130 | nein |
| 2 d | 1% Hexahydrophthalsäure-diglycidylester<br>2% TNPP +) | 23 | 160 | nein |
| 2 e | 1% Hexahydrophthalsäure-diglycidylester<br>1% TNPP +) | 23 | 250 | nein |

+) TNPP = Trisnonylphenylphosphit

## Beispiel 3

Nach den Angaben des Beispiels 1 wurde ein Polychloralkan mit der Kohlenstoffkettenlänge C$_{17}$-bis C$_{24}$ vom Chlorgehalt ca. 42% geprüft. Die Ergebnisse sind in nachstehender Tabelle zusammengestellt.

| Vers. Nr. | Stabilisator und Menge (Gew.—%) | Temperungs-zeit (Stdn.) | Jodfarb-zahl | Korrosion |
|---|---|---|---|---|
| 3 a | 1% epoxidiertes Sojaöl | 0,5 | >1100 | ja |
| 3 b | 1% Hexahydrophthalsäure-diglycidylester<br>1% TNPP +) | 10 | >1100 | nein |

+) TNPP = Trisnonylphenylphosphit

## Beispiel 4

Für die Verwendung von Polychloralkanen in sog. Pilgerölen wird ein Temperungstest in Anlehnung an eine Vorschrift der Firma Mannesmann-Demag-Meer durchgeführt, wobei das zu prüfende Produkt über 72 Stunden bei 150°C in Kontakt mit Eisen getempert wird. Beurteilungskriterien sind die Verfärbung des Produktes und Korrosionen an dem Metall. Bei diesem Test wird folgendermaßen verfahren:

In ein 250-ml Becherglas werden 200 g des zu prüfenden Polychloralkans eingewogen. Ein sog. Kesternichblech aus Stahl Ck 22 nach DIN 17200 in der Abmessung 100 × 50 × 3 mm wird in das Polychloralkan eingetaucht, so daß es sich zur Hälfte in dem Polychloralkan und zur anderen Hälfte außerhalb der Flüssigkeit befindet. Das Kesternichblech wird vor Gebrauch mit Schleifpapier Körnung 100 geschliffen und mit Aceton gewaschen. Nach Ablauf der Testzeit sollen an dem Blech in der Eintauchzone und in der Dampfphase keine Korrosionen festzustellen sein. Das Polychloralkan soll nach dem Versuch in Verdünnung 1 : 20 mit Benzol (1 Teil Polychloralkan + 20 Teile Benzol) eine Jodfarbzahl nach DIN 61 62 von nicht über 7 aufweisen. In der nachstehenden Tabelle sind einige Ergebnisse mit unterschiedlichen, gemäß der Erfindung stabilisierten Polychloralkanen aufgeführt. Zum Vergleich wurden die Ergebnisse von Polychloralkanen mit bekannten Stabilisatoren aufgenommen (4b, 4c, 4e).

| Vers. Nr. | Polychloralkan | Stabilisator und Menge (Gew.-%) | Jodfarb- zahl | Korrosion | |
|---|---|---|---|---|---|
| | | | | Ein- tauch- zone | Dampf- phase |
| 4 a | $C_{10}$–$C_{13}$-Paraffin ca. 56% Cl | 1% Hexahydrophthalsäuredi- glycidylester 1% TNPP +) | 1 | keine | keine |
| 4 b | $C_{10}$–$C_{13}$-Paraffin ca. 56% Cl | 1% epoxidiertes Sojaöl | >1100 | ja | ja |
| 4 c | $C_{10}$–$C_{13}$-Paraffin ca. 70% Cl | 0,5% Hexahydrophthalsäure- diglycidyl- ester 2% epoxidiertes Sojaöl | 100 | ja | ja |
| 4 d | $C_{10}$–$C_{13}$-Paraffin ca. 70% Cl | 1% Hexahydrophthalsäuredi- glycidylester 1% TNPP +) | 5 | keine | keine |
| 4 e | $C_{14}$–$C_{17}$-Paraffin ca. 56% Cl | 1% epoxidiertes Sojaöl | >1100 | ja | ja |
| 4 f | $C_{14}$–$C_{17}$-Paraffin ca. 56% Cl | 1% Hexahydrophthalsäure- diglycidylester 1% TNPP +) | 3 | neine | neine |

+) TNPP = Trisnonylphenylphosphit

## Beispiel 5

Wie in der Beschreibung erwähnt, werden in Metallbearbeitungsflüssigkeiten für Automatenarbeiten häufig geringe Mengen Polychloralkane (meist unter 10 Gew.-%) zur Verbesserung der Schmierwirkung eingesetzt. Seitens der verbrauchenden Industrie besteht die Forderung, daß die Automatenöle praktisch aschefrei sind und in bestimmten Korrosionstests bei Gegenwart von Wasser und verschiedenen Metallen keine Korrosionen verursachen.

Erfindungsgemäß stabilisiertes Polychloralkan wurde einem derartigen Korrosionstest entsprechend der Vorschrift des Volkswagenwerkes unterworfen, bei dem wie folgt verfahren wird:

98 ccm des zu prüfenden Schmierstoffes werden mit 2 ccm Wasser 1 Minute mit 2000 U/min. vermischt. Für die Tests werden Stahl und Kupfer benötigt. Der Stahl wird einem Kugellager mit dem Kurzzeichen 6210 entnommen (Rillenkugellager ohne Füllnuten einreihig 6210; Wellendurchmesser 50 mm, Außendurchmesser 90 mm, Breite 20 mm). Das Kugellager wird in Viertel aufgeschnitten. Zum Test wird das Viertel des inneren Ringes benutzt. Das Kupferblech mit den Abmessungen 50 × 5 × 1 mm muß aus Elektrolytkupfer hergestellt sein.

Die Prüfkörper werden mit Normalbenzin fett- bzw. ölfrie gewaschen und mit Filtrierpapier abgerieben. Nach dem Trocknen wird die Innenseite des Ringviertels mit Schleifpapier 00 aufgerauht. Der Prüfkörper wird dann nochmals gewaschen und mit Filtrierpapier getrocknet. Danach ist der Prüfkörper fertig zum Einsatz. Das Kupferblech wird in gleicher Weise vorbereitet wie der Stahlkörper.

Das — wie oben beschrieben — hergestellte Öl-Wasser-Gemisch befindet sich in einem 400 ccm-Becherglas hoher Form. Die Prüfkörper werden in das Becherglas so eingelegt, daß sie sich nicht berühren. Das Becherglas wird mit einem Überglas abgedeckt und in einen Trockenschrank gestellt, der auf 100°C eingestellt ist. Die Testdauer beträgt 48 Stunden. Nach dem Test darf sich in dem Öl-Wasser-Gemisch kein Schlamm gebildet haben. Der Stahl darf keine Rostansätze, das Kupfer nur leichte Anlauffarbe zeigen.

Nach diesem Test wurden erfindungsgemäß stabilisierte Polychloralkane in einer Schmierstofformulierung, bestehend aus 2,5 bzw. 5 Gew.-% Polychloralkan, 5 Gew.-% Fettöl (Spermöl) und 87,5 Gew.-% bzw. 85 Gew.-% Mineralöl (Type Coray 50/Esso AG) unter Zusatz der o.a. Wassermenge untersucht. Die Ergebnisse sind in der nachstehenden Tabelle aufgeführt.

| Vers. Nr. | Menge (Gew.–%) und Art des Polychloralkans im Schmierstoff | Stabilisierung des Polychloralkans mit | Korrosion | | |
|---|---|---|---|---|---|
| | | | Stahl | Kupfer | Schlamm |
| 5 a | 2,5% $C_{14}$–$C_{17}$-Paraffin 56% Cl | 1% epoxidiertem Sojaöl | ja | Anlauf | ja |
| 5 b | 2,5% $C_{14}$–$C_{17}$-Paraffin 56% Cl | 1% Hexahydrophthalsäure-diglycidylester 1% TNPP +) | nein | nein | nein |
| 5 c | 5% $C_{14}$–$C_{17}$-Paraffin 56% Cl | 1% Hexahydrophthalsäure-diglycidylester 1% TNPP +) | nein | nein | nein |

+) TNPP = Trisnonylphenylphosphit

**Patentansprüche**

1. Verfahren zur Hochtemperaturstabilisierung von Polychloralkanen mit Stabilisatorkombinationen auf Basis von Epoxiden, dadurch gekennzeichnet, daß man Polychloralkanen, die 8 bis 30 Kohlenstoffatome und einen Chlorgehalt von 10 bis 70 Gewichtsprozent aufweisen, eine Stabilisatorkombination folgender Zusammensetzung zufügt:

a) 10 bis 90 Gewichtsprozent
$a_1$) cycloaliphatische Epoxide (Epoxidsauerstoff ausschließlich an cycloaliphatischen Ringen gebunden),
$a_2$) gemischt cycloaliphatisch-aliphatische Epoxide (Epoxidsauerstoff unterschiedlich gebunden),
$a_3$) Glycidylester cycloaliphatischer Carbonsäuren (Epoxidsauerstoff ausschließlich an den Seitenketten gebunden),
$a_4$) Glycidyläther cycloaliphatischer Alkohole (Epoxidsauerstoff ausschließlich an den Seitenketten gebunden) oder
$a_5$) cycloaliphatische Epoxyäther (Epoxidsauerstoff ausschließlich an cycloaliphatischen Ringen gebunden) und
b) 90 bis 10 Gewichtsprozent tertiäre Ester der phosphorigen Säure mit
$b_1$) längerkettigen, geradlinigen oder verzweigten aliphatischen Monoalkoholen,
$b_2$) Polyalkoholen,
$b_3$) Phenol oder
$b_4$) Alkylphenolen, die 8 bis 18 Kohlenstoffatome in den Alkylketten aufweisen.

2. Verfahren nach Anspruch 1, dadurch gekennzeichnet, daß die Stabilisatorkombination in einer Menge von 0,2 bis 5 Gew.-%, bezogen auf das Polychloralkan, zugesetzt wird.

3. Verfahren nach Anspruch 1, dadurch gekennzeichnet, daß man die Stabilisatorkombination den Polychloralkanen unmittelbar nach deren Herstellung in der Wärme zusetzt.

4. Verfahren nach den Ansprüchen 1 bis 3, dadurch gekennzeichnet, daß die Stabilisatorkombination aus dem Diglycidylester der Hexahydrophthalsäure und Tris-nonylphenylphosphit besteht.

5. Stabilisatorkombinationen für die Hochtemperaturstabilisierung von Polychloralkanen mit einem Chlorgehalt von 10 bis 70 Gew.-% welche durch Chlorieren von Paraffinkohlenwasserstoffen mit 8 bis 30 C-Atomen erhalten worden waren, bestehend aus

a) 10 bis 90 Gewichtsprozent
$a_1$) cycloaliphatischen Epoxiden (Epoxidsauerstoff ausschließlich an cycloaliphatischen Ringen gebunden),
$a_2$) gemischt cycloaliphatisch-aliphatische Epoxiden (Epoxidsauerstoff unterschiedlich gebunden),
$a_3$) Glycidylestern cycloaliphatischer Carbonsäuren (Epoxidsauerstoff ausschließlich an den Seitenketten gebunden),
$a_4$) Glycidyläthern cycloaliphatischer Alkohole (Epoxidsauerstoff ausschließlich an den Seitenketten gebunden) oder
$a_5$) cycloaliphatische Epoxyäther (Epoxidsauerstoff ausschließlich an cycloaliphatischen Ringen gebunden) und
b) 90 bis 10 Gewichtsprozent tertiären Estern der phosphorigen Säure mit
$b_1$) längerkettigen, geradlinigen oder verzweigten aliphatischen Monoalkoholen,
$b_2$) Polyalkoholen,
$b_3$) Phenol oder
$b_4$) Alkylphenolen, die 8 bis 18 Kohlenstoffatome in den Alkylketten aufweisen.

**Revendications**

1. Procédé de stabilisation à haute température de polychloro-alcanes au moyen d'associations stabilisantes à base d'époxydes, procédé caractérisé en ce qu'on ajoute, à des polychloro-alcanes contenant de 8 à 30 atomes de carbone et ayant une teneur en chlore de 10 à 70 % en poids, une association stabilisante ayant la composition suivante:

a) de 10 à 90% en poids

$a_1$) d'époxydes cycloaliphatiques (dont l'oxygène époxydique est exclusivement porté par des noyaux cycloaliphatiques),

$a_2$) d'époxydes mixtes à la fois cycloaliphatiques et aliphatiques (oxygène époxydique porté de différentes façons),

$a_3$) d'esters glycidyliques d'acides carboxyliques cycloaliphatiques (oxygène époxydique exclusivement porté par les chaînes latérales),

$a_4$) d'éthers glycidyliques d'alcools cycloaliphatiques (oxygène époxydique exclusivement porté par les chaînes latérales) ou

$a_5$) d'éthers époxydiques cycloaliphatiques (oxygène époxydique exclusivement porté par des noyaux cycloaliphatiques),

et

b) de 90 à 10 % en poids de tri-esters de l'acide phosphoreux avec

$b_1$) des mono-alcools aliphatiques à longues chaînes, linéaires ou ramifiés,

$b_2$) des polyols,

$b_3$) le phénol ou

$b_4$) des alkyl-phénols contenant de 8 à 18 atomes de carbone dans les chaînes alkyliques.

2. Procédé selon la revendication 1, caractérisé en ce que l'association stabilisante est ajoutée en une quantité de 0,2 à 5 % en poids par rapport au polychloroalcane.

3. Procédé selon la revendication 1, caractérisé en ce que l'association stabilisante est ajoutée aux polychloro-alcanes juste après la préparation de ceux-ci, à chaud.

4. Procédé selon l'une quelconque des revendications 1 à 3, caractérisé en ce que l'association stabilisante est constituée de l'ester diglycidylique de l'acide hexahydrophthalique et du phosphite de tris-(nonyl-phényle).

5. Associations stabilisantes pour la stabilisation à haute température de polychloro-alcanes qui ont une teneur en chlore de 10 à 70 % en poids et qui ont été obtenus par chloration d'hydrocarbures paraffiniques en $C_8$—$C_{30}$, associations caractérisées en ce qu'elles sont constituées:

a) de 10 à 90 % en poids

$a_1$) d'époxydes cycloaliphatiques (dont l'oxygène époxydique est exclusivement porté par des noyaux cycloaliphatiques),

$a_2$) d'époxydes mixtes à la fois cyclo-aliphatiques et aliphatiques (oxygène époxydique porté de différentes façons)

$a_3$) d'esters glycidyliques d'acides carboxyliques cycloaliphatiques (oxygène époxydique exclusivement porté par les chaînes latérales),

$a_4$) d'éthers glycidyliques d'alcools cycloaliphatiques (oxygène époxydique exclusivement porté par les chaînes latérales) ou

$a_5$) d'éthers époxydiques cycloaliphatiques (oxygène époxydique exclusivement porté par des noyaux cycloaliphatiques),

et

b) de 90 à 10 % en poids de tri-esters de l'acide phosphoreux avec

$b_1$ des mono-alcools aliphatiques à longues chaînes, linéaires ou ramifiés,

$b_2$) des polyols,

$b_3$) le phénol ou

$b_4$) des alkyl-phénols contenant de 8 à 18 atomes de carbone dans les chaînes alkyliques.

**Claims**

1. Process for high temperature stabilization of polychloralkanes with stabilizer combinations on the basis of epoxides, characterized in that a stabilizer combination of the following composition

a) 10 zo 90 % by weight of

$a_1$) cycloaliphatic epoxides (epoxide oxygen exclusively linked to cycloaliphatic rings),

$a_2$) mixed cycloaliphatic-aliphatic epoxides (differently linked epoxide oxygen,

$a_3$) glycidyl esters of cycloaliphatic carboxylic acids (epoxide oxygen exclusively linked to side chains),

$a_4$) glycidyl esters of cycloaliphatic alcohols (epoxide oxygen exclusively linked to side chains), or

$a_5$) cycloaliphatic epoxide ethers (epoxide oxygen exclusively linked to cycloaliphatic rings) and

b) 90 to 10 % by weight of tertiary esters of phosphorous acid with

$b_1$) longer chain, linear or branched aliphatic monoalcohols,

$b_2$) polyalcohols,

$b_3$) phenol, or

$b_4$) alkyl phenols having 8 to 18 carbon atoms in the alkyl chains, is added to polychloralkanes having 8 to 30 carbon atoms and a chlorine content of 10 to 70 % by weight.

2. Process according to claim 1, characterized in that the stabilizer combination is added in an amount of 0.2 to 5 % by weight, calculated on the polychloroalkane.

3. Process according to claim 1, characterized in that the stabilizer combination is added to the polychloroalkane immediately after their production in the heat.

4. Process according to claims 1 to 3, characterized in that the stabilizer combination consists of the diglycidyl ester of hexahydrophthalic acid and trisnonylphenyl phosphite.

5. Stabilizer combination for high temperature stabilization of polychloroalkanes having a chlorine content of 10 to 70 % by weight and obtained by chlorination of paraffin hydrocarbons having 8 to 30 carbon atoms, consisting of

a) 10 to 90 % by weight of

$a_1$) cycloaliphatic epoxides (epoxide oxygen exclusively linked to cycloaliphatic rings),

$a_2$) mixed cycloaliphatic-aliphatic epoxides (differently linked epoxide oxygen,

$a_3$) glycidyl esters of cycloaliphatic carboxylic acids (epoxide oxygen exclusively linked to side chains),

$a_4$) glycidyl esters of cycloaliphatic alcohols (epoxide oxygen exclusively linked to side chains), or

$a_5$) cycloaliphatic epoxide ethers (epoxide oxygen exclusively linked to cycloaliphatic rings) and

b) 90 to 10 % by weight of tertiary esters of phosphorous acid with

$b_1$) longer chain, linear or branched aliphatic monoalcohols,

$b_2$) polyalcohols,

$b_3$) phenol, or

$b_4$) alkyl phenols having 8 to 18 carbon atoms in the alkyl chains.

9